# FASCICULE DE BREVET EUROPEEN

(11) **EP 3 393 228 B1**
(45) Date de publication et mention de la délivrance du brevet: **02.10.2019**
(21) Numéro de dépôt: 16825803.6
(22) Date de dépôt: 06.12.2016
(51) Int. Cl.: A01D 34/00

(54) **TONDEUSE ÉLECTRIQUE ANTICIPATIVE ET PROCÉDÉ DE PILOTAGE D'UNE TELLE TONDEUSE**
ANTIZIPATIVER ELEKTROMÄHER UND VERFAHREN ZUR STEUERUNG EINES SOLCHEN MÄHERS
ANTICIPATIVE ELECTRIC MOWER AND METHOD OF PILOTING SUCH A MOWER

(30) Priorité: 23.12.2015 FR 1563187
(43) Date de publication de la demande: 31.10.2018
(73) Titulaire: PELLENC, 84120 Pertuis (FR)
(72) Inventeur: PELLENC, Roger, 84120 Pertuis (FR)
(74) Mandataire: Weber, Etienne Nicolas
(86) Numéro de dépôt international: PCT/FR2016/053226
(87) Numéro de publication internationale: WO 2017/109318

(56) Documents cités:
- EP-A1- 2 342 964
- DE-A1-102007 036 222
- US-A1- 2012 228 041

## Description

### Domaine technique

La présente invention concerne une tondeuse électrique du type alimenté par batterie électrique. On entend par tondeuse électrique, une tondeuse dont la ou les lames de coupe sont mues par un moteur électrique. L'invention concerne plus précisément une tondeuse anticipative, capable de déterminer de manière automatique une tâche de tonte, et d'adapter son fonctionnement à cette tâche.

Elle concerne également un procédé de pilotage du moteur d'entraînement de la ou des lames de coupe de la tondeuse.

L'invention trouve des applications notamment dans le domaine des tondeuses à conducteur marchant ou à conducteur porté, pour l'entretien des espaces verts publics ou privés.

### Etat de la technique antérieure

Les tondeuses anticipatives connues sont généralement des tondeuses robotisées, capables de se mouvoir de manière autonome sur un terrain à tondre.

La fonction anticipative de ces tondeuses consiste généralement à distinguer des surfaces enherbées, à tondre, et des surfaces à éviter. Elle consiste notamment à distinguer des zones déjà tondues et des zones encore à tondre.

De telles tondeuses sont connues, par exemple, des documents suivants : US 3 924 389, US2008/0109126 et DE 199 32 552. Elles sont pourvues de divers capteurs disposés à l'avant du carter de coupe de la tondeuse, soit en amont de la zone couverte par la lame de coupe. Les capteurs sont utilisés pour déterminer la présence d'herbe et, selon le cas, la hauteur de l'herbe ou une densité d'herbe à tondre.

Ces paramètres sont pris en compte pour optimiser le déplacement de la tondeuse, en termes de trajectoire ou de vitesse d'avancement.

On connaît également des tondeuses permettant d'évaluer une hauteur et/ou une densité d'herbe à couper à partir d'un signal prédictif, des tondeuses permettant d'ajuster la vitesse de leur moteur, et des tondeuses permettant d'ajuster une vitesse d'avancement. A ce sujet, on peut se reporter aux documents suivants : EP2 342 964, US2012/228041 et DE10 2007 036222.

### Exposé de l'invention

L'invention a pour but de proposer une tondeuse anticipative, et notamment une tondeuse pour conducteur marchant, ou pour conducteur porté, permettant d'augmenter à la fois le rendement de tonte et le confort d'utilisation pour le conducteur.

L'invention a en particulier pour but de proposer une tondeuse capable, dans une large mesure, d'être utilisée à vitesse d'avancement constante. L'invention vise à libérer le conducteur de la tondeuse de la préoccupation de constamment faire varier la vitesse d'avancement de la tondeuse en fonction de la hauteur ou de la densité d'herbe que la lame de coupe va aborder.

L'invention a encore pour but de proposer une tondeuse électrique dont l'autonomie de tonte est améliorée pour une capacité de batterie d'alimentation donnée. L'invention vise à ajuster l'énergie consommée par la tondeuse au voisinage du strict nécessaire pour tondre la végétation rencontrée.

L'invention a encore pour but de proposer une tondeuse électrique dont le bruit de fonctionnement est réduit. L'invention vise à réduire autant que possible les sources de bruit de la tondeuse et, là aussi, au strict nécessaire pour tondre la végétation rencontrée.

Pour atteindre ces buts, l'invention concerne plus précisément une tondeuse électrique du type à batterie comprenant :
- au moins une lame de coupe,
- un moteur électrique d'entraînement de la lame de coupe,
- une unité de pilotage électronique du moteur électrique d'entraînement de la lame de coupe, et
- au moins un capteur optique disposé en amont de la lame de coupe. Conformément à l'invention,
- le capteur optique est orienté vers le sol avec une inclinaison dans une direction d'avancement de la tondeuse, et configuré pour délivrer, au cours de l'avancement de la tondeuse, au moins un signal prédictif utilisable pour déterminer, après traitement, au moins l'un parmi une hauteur de végétaux à couper, une densité de végétaux à couper, et une combinaison d'une hauteur et d'une densité de végétaux à couper,
- l'unité de pilotage électronique est configurée pour établir une vitesse de rotation optimum du moteur d'entraînement de la lame de coupe, la vitesse de rotation optimum étant établie en fonction dudit signal prédictif du capteur optique, et d'une vitesse d'avancement de la tondeuse choisie parmi une vitesse d'avancement standard, une vitesse d'avancement effective, et une vitesse d'avancement souhaitée.

La tondeuse est de préférence une tondeuse à conducteur marchant.

La tondeuse peut comporter une ou plusieurs lames de coupe mues par un moteur électrique. Chaque lame peut être montée en rotation autour d'un arbre de rotation qui peut être horizontal (par exemple pour un tambour hélicoïdal) ou vertical (lames de coupe, disque de coupe, ...), mais peut aussi être une lame de coupe alternative. Lorsque la tondeuse comprend plusieurs lames de coupe, chaque lame de coupe peut être associée à un moteur électrique. Un unique moteur électrique peut aussi être couplé à l'ensemble des lames de coupe. Dans la suite du texte, la référence à une pluralité de lames de coupe ne préjuge pas d'une possible réalisation d'une tondeuse à lame de coupe unique.
Les lames de coupe sont de préférence des lames rotatives, et peuvent être logées dans un carter de coupe, par exemple un carter de coupe suspendu sous un châssis de la tondeuse.

L'unité de pilotage électronique du moteur est principalement destinée à gérer l'alimentation électrique du moteur électrique d'entraînement des lames et de contrôler sa vitesse de rotation. Dans le cas d'une pluralité de lames de coupes associées chacune à un moteur électrique, l'unité de pilotage électronique est prévue pour gérer l'alimentation électrique de l'ensemble des moteurs. Dans le cas d'un moteur sans balai à plusieurs phases, elle permet, par exemple d'alimenter en énergie les différentes phases du moteur selon des séquences permettant de contrôler la rotation et notamment la vitesse de rotation du moteur. L'unité de pilotage électronique du moteur peut comporter une ou plusieurs cartes électroniques auxquelles peuvent être dédiées, le cas échéant, d'autres fonctions de commande de la tondeuse, décrites ultérieurement.

Le ou les capteurs optiques de la tondeuse peuvent être des capteurs sensibles dans des longueurs d'ondes du spectre visible de la lumière, dans le spectre infrarouge, et en particulier dans le spectre du proche infrarouge. La plage de longueurs d'ondes est comprise, par exemple, entre 400nm et 1200nm. Dans la suite de la description, et par simplification, il est fait référence à un seul capteur. Toutefois on gardera à l'esprit que la tondeuse peut être équipée de plusieurs capteurs, et en particulier de deux capteurs redondants.

De manière avantageuse, le capteur peut être associé à une source d'éclairage prévue pour éclairer une zone de mesure cible du capteur à l'avant de la lame de coupe. Elle peut être intégrée au capteur ou être séparée du capteur. Elle couvre de préférence tout ou partie de la plage de longueur d'onde dans laquelle le capteur optique est sensible. La source d'éclairage est de préférence une source d'éclairage puisée de manière à discriminer une réponse du capteur optique à la lumière de la source d'éclairage par rapport, par exemple, à une réponse du capteur à la lumière continue du jour.

Le capteur optique peut être un capteur évolué tel qu'un capteur d'image, voire une caméra, capables de former, après traitement, une image électronique plus ou moins détaillée des végétaux à tondre. Dans une version plus économique, le capteur peut être un simple capteur du type capteur de proximité. A titre d'illustration, il peut s'agir d'un capteur du type ADPS-9190 commercialisé par la société Avago Technologies. Il s'agit d'un composant intégré incluant à la fois une diode électroluminescente infrarouge, capable d'éclairer la zone de mesure du capteur, et d'une ou de plusieurs photodiodes capables de mesurer la lumière réfléchie ou rétrodiffusée depuis la zone de mesure.

Le signal délivré par le capteur optique de la tondeuse est utilisé, après traitement, pour évaluer de manière prédictive une quantité de végétaux, par exemple d'herbe, susceptible d'atteindre la ou les lames de la tondeuse. Cette évaluation doit avoir lieu avant que les végétaux n'atteignent les lames de manière à permettre au moteur électrique et aux lames d'atteindre la vitesse de rotation optimum déterminée conformément à l'invention.

Deux dispositions sont envisagées pour anticiper suffisamment l'évaluation de la quantité de végétaux à tondre. Une première disposition consiste à placer le capteur optique de façon à établir une zone de mesure en amont des lames. Le terme amont s'entend par rapport à une direction d'avancement de la tondeuse sur une surface à tondre. La zone de mesure du capteur est ainsi située à l'avant d'une zone de coupe de la tondeuse, et, lorsqu'elle en est équipée, à l'avant d'un carter de coupe logeant les lames de coupe. La zone de mesure du capteur optique est située à une distance du carter de coupe comprise, par exemple, entre 10 et 30 cm, et mesurée parallèlement à l'avancement de la tondeuse.

Une deuxième disposition destinée à anticiper l'évaluation de la végétation, consiste à donner au capteur une inclinaison dans la direction d'avancement de la tondeuse. La direction d'avancement s'entend comme la direction allant, lors de l'utilisation de la tondeuse, d'une zone déjà tondue à l'arrière de la tondeuse vers une zone encore à tondre à l'avant de la tondeuse. De manière plus précise, le capteur est de préférence fixé sur la tondeuse au-dessus d'un plan de coupe des lames de coupe. Il est fixé de préférence en une position suffisamment haute pour être au-dessus des végétaux, éventuellement repliés, qui entrent dans le carter de coupe. Il est alors orienté vers le sol tout en ayant une inclinaison ou pour le moins une composante d'inclinaison dans la direction d'avancement. Le capteur optique présente, par exemple, un axe de mesure incliné dans une direction d'avancement de la tondeuse. Un angle d'inclinaison du capteur par rapport au plan de coupe selon lequel sont agencées la ou les lames de coupe est de préférence compris entre 15 et 75 degrés d'angle, mesurés sous le plan de coupe.

Comme évoqué précédemment, le signal du capteur optique est représentatif d'une hauteur de végétaux à couper, d'une densité de végétaux à couper ou une combinaison de la hauteur et de la densité. L'angle d'inclinaison permet de jouer sur cette combinaison. En effet, une orientation du capteur plus proche de l'horizontale a tendance, notamment pour un capteur optique du type capteur de proximité, à favoriser la prise en compte de la hauteur des végétaux à couper. Dans ce cas en effet, l'intensité de la lumière renvoyée vers le capteur est d'autant plus importante que les végétaux sont hauts. A l'inverse, une orientation plus proche de la verticale a tendance à privilégier une sensibilité à la densité de la végétation. Dans ce dernier cas, les végétaux renvoient la lumière vers le capteur davantage que le sol et donc plus l'herbe est dense, plus l'intensité de lumière renvoyée vers le capteur est importante.

Le signal délivré par le capteur optique peut être mis en forme par un circuit électronique associé au capteur ou par un circuit électronique d'une carte électronique de l'unité de pilotage. Il est utilisé par l'unité de pilotage électronique pour la détermination de la vitesse de rotation optimum.

En raison du couplage en rotation du moteur d'entraînement et des lames de coupe, la vitesse de rotation optimum s'entend indifféremment comme la vitesse de rotation optimum du moteur ou de la vitesse de rotation optimum de la lame.

La vitesse de rotation optimum est déterminée en fonction d'un premier paramètre qui est la quantité de végétaux à couper, ce paramètre étant établi à partir du signal prédictif du capteur optique mentionné ci-dessus, et en fonction d'un deuxième paramètre qui est la vitesse d'avancement de la tondeuse. On comprend en effet que la quantité de végétaux qui atteint la ou les lames de coupe par unité de temps, lors du déplacement de la tondeuse, dépend de la vitesse d'avancement de la tondeuse.
La vitesse d'avancement de la tondeuse prise en compte pour l'établissement de la vitesse de rotation optimum peut être une vitesse d'avancement effective. Ceci est le cas, par exemple, lorsque la tondeuse est une tondeuse poussée. Sa vitesse dépend de la vitesse de marche de son conducteur. Dans ce cas, la tondeuse peut comporter un capteur de vitesse pour établir un signal de vitesse d'avancement effective de la tondeuse. L'unité de pilotage est alors reliée au capteur de vitesse pour établir la vitesse de rotation optimum du moteur d'entraînement de lame. La vitesse de rotation optimum est établie en fonction du signal prédictif du capteur optique et en fonction du signal de vitesse d'avancement effective. Le capteur de vitesse est, par exemple, un tachymètre ou un capteur capable de compter un nombre de rotation d'une roue de la tondeuse par unité de temps. Lorsque la tondeuse est équipée d'une unité de géolocalisation, le capteur de vitesse peut aussi être constitué par cette unité délivrant une indication de vitesse.

La vitesse d'avancement de la tondeuse prise en compte pour l'établissement de la vitesse de rotation optimum peut aussi être une vitesse sélectionnée par le conducteur. Ceci est le cas notamment lorsque la tondeuse est une tondeuse dite "autotractée". Dans ce cas, la tondeuse peut être pourvue d'une interface de saisie d'une vitesse d'avancement souhaitée, pour la commande d'au moins un moteur électrique d'avancement de la tondeuse. L'unité de pilotage est alors reliée à l'interface de saisie pour établir la vitesse de rotation optimum du moteur d'entraînement de lame en fonction du signal prédictif du capteur optique et en fonction d'une saisie de la vitesse d'avancement souhaitée.

A défaut de capteur de vitesse ou d'interface de saisie, la vitesse d'avancement prise en compte pour établir la vitesse de rotation optimum du moteur d'entraînement de lame peut encore être une vitesse standard. Il s'agit d'une vitesse fixe et prédéterminée comprise, par exemple, entre 2 et 5 km/h. La vitesse standard est inscrite comme un paramètre du programme informatique de l'unité de pilotage.

La vitesse de rotation optimum est déterminée de préférence en respectant une ou plusieurs des contraintes suivantes :
- elle doit être suffisante pour conférer à la lame un moment cinétique de rotation lui permettant de couper la hauteur et la densité de végétaux anticipée de manière propre et sans blocage.
- elle doit être suffisante pour l'évacuation des végétaux coupés vers un bac de ramassage, si la tondeuse en est équipée,
- elle doit être minimisée pour réduire la consommation d'énergie électrique du moteur d'entraînement des lames, et augmenter l'autonomie de tonte
- elle doit être minimisée pour réduire les nuisances sonores de la tonte, sachant que les nuisances sonores sont une fonction croissante de la vitesse de rotation des lames.
- elle doit être inférieure à une vitesse de rotation maximum du moteur pour éviter un échauffement anormal du moteur.
- elle doit pouvoir évoluer rapidement, notamment à la hausse, pour absorber une végétation devenant brusquement dense.
L'ensemble de ces paramètres, et d'autres encore, peut être pris en compte dans une équation ou des courbes de vitesses optimum paramétrées programmées dans un logiciel de l'unité de pilotage du moteur.

Selon une autre possibilité, l'unité de pilotage peut comporter une table de correspondance programmée avec une pluralité de vitesses de rotation de consigne du moteur d'entraînement, l'unité de pilotage étant configurée pour sélectionner la vitesse de rotation optimum du moteur d'entraînement de la lame parmi la pluralité de vitesses de consigne de la table de référence.
La table de correspondance peut être une table multidimensionnelle présentant une entrée avec des plages de vitesse d'avancement, et une entrée avec des plages de quantité de végétaux à tondre représentées par une valeur de sortie du signal délivré par la capteur optique. La table de correspondance présente alors en sortie des vitesses de rotation optimum, associées.

A titre d'illustration, pour un capteur optique du type à mesure de proximité tel que mentionné précédemment, les plages de quantités de végétaux peuvent correspondre simplement à des gammes d'intensité de la lumière reçue par les photodiodes, ou des gammes de courant photoélectrique générés par ces photodiodes.

La vitesse de rotation optimum du moteur électrique d'entraînement de lame peut être réévaluée au fur et à mesure de l'avancement de la tondeuse lorsqu'elle est en utilisation. La réévaluation peut être continue ou périodique à intervalles réguliers ou non.

Selon un perfectionnement, l'unité de pilotage peut être configurée pour établir une valeur d'accélération, respectivement de décélération, entre une vitesse de rotation optimum courante du moteur d'entraînement de la lame et une nouvelle vitesse de rotation optimum établie lors du déplacement de la tondeuse.

L'accélération est, par exemple, proportionnelle à l'importance de la variation de la quantité de végétaux à tondre. L'accélération est choisie de préférence pour être :
- suffisante pour permettre au moteur et aux lames de coupe d'atteindre la vitesse de rotation optimum dans l'intervalle de temps disponible entre la mesure effectuée par le capteur optique et le moment ou des végétaux vus par le capteur optique atteignent les lames. Cet intervalle de temps dépend d'une distance selon la direction d'avancement entre une zone de mesure du capteur optique et une zone de coupe de la ou des lames de coupe. L'intervalle de temps dépend aussi de la vitesse d'avancement de la tondeuse telle que décrite précédemment.
- suffisamment faible pour ne pas occasionner une surconsommation en énergie ou un bruit excessif.

Les valeurs d'accélération ou de décélération, peuvent également être programmées dans un logiciel de fonctionnement de l'unité de pilotage ou être des valeurs prédéterminées d'une table de correspondance de type "look-up table"

Comme indiqué ci-dessus, l'unité de pilotage est de préférence configurée pour établir la valeur d'accélération, respectivement de décélération, en fonction de la vitesse d'avancement de la tondeuse. En effet une vitesse d'avancement plus grande nécessite une plus grande réactivité et donc de plus fortes accélérations et de décélérations. La vitesse d'avancement s'entend encore comme l'une parmi une vitesse standard prédéterminée, une vitesse effective et une vitesse de consigne sélectionnée.

Selon une particularité intéressante de l'invention, la tondeuse peut comporter une carte de traitement de signal associée au capteur optique, la carte de traitement de signal étant configurée pour établir un signal d'encrassement du capteur. La carte de traitement de signal peut être à proximité immédiate du capteur ou faire partie des cartes électroniques de l'unité de pilotage du moteur électrique d'entraînement de lame.
Le signal d'encrassement du capteur, peut être utilisé pour corriger le signal prédictif du capteur optique ou pour déclencher un avertissement lorsque l'encrassement devient excessif. L'interface de commande de la tondeuse peut comporter, par exemple, un voyant d'avertissement, invitant l'utilisateur à nettoyer le capteur optique.

Lorsque la tondeuse comprend une pluralité de capteurs optiques, la carte de traitement de signal peut être configurée pour établir un signal prédictif en fonction d'un signal de mesure de chaque capteur optique, par exemple en effectuant une moyenne de l'ensemble des signaux prédictifs de chaque capteur. La contribution de chaque capteur pour l'établissement du signal prédictif peut alors être pondérée en fonction de l'encrassement des capteurs, par exemple, de manière à réduire l'influence des capteurs trop encrassés.

L'invention concerne également un procédé de pilotage d'un moteur d'entraînement d'au moins une lame de coupe d'une tondeuse électrique du type à batterie selon l'une quelconque des revendications 1-15, comprenant :
- une mesure prédictive en amont de la lame de coupe, et au cours d'un avancement de la tondeuse, d'au moins l'un parmi une hauteur de végétaux, une densité de végétaux et une combinaison d'une hauteur et d'une densité de végétaux susceptibles d'atteindre la lame de coupe,
- l'établissement d'une vitesse d'avancement de la tondeuse,
- la fixation, au fur et à mesure de l'avancement de la tondeuse, d'une vitesse de rotation optimum du moteur d'entraînement de la lame de coupe, la vitesse de rotation optimum étant établie en fonction de ladite mesure prédictive, et en fonction de la vitesse d'avancement de la tondeuse,
- l'alimentation électrique du moteur avec une énergie suffisante pour provoquer une rotation du moteur d'entraînement de la lame de coupe à la vitesse de rotation optimum.

L'énergie électrique fournie au moteur d'entraînement de la lame est ainsi variable en fonction de la quantité de végétaux à tondre, en termes de hauteur et de densité, et de la vitesse d'avancement de la tondeuse. Dans ce cas encore, la vitesse d'avancement peut être l'une parmi une vitesse effective, une vitesse de consigne sélectionnée ou une vitesse standard prédéterminée, telles que décrites précédemment.

Des dispositions particulières peuvent être prises dans une situation où la vitesse de rotation requise excéderait les capacités du moteur électrique ou demanderait une quantité d'énergie excédant la capacité d'une batterie d'alimentation en énergie du moteur, ou d'une capacité restante d'une telle batterie partiellement déchargée.
En particulier, la détermination par l'unité de pilotage d'une situation de dépassement de capacité, peut être utilisée pour :
- déclencher un signal d'avertissement du conducteur l'invitant à temporairement réduire la vitesse d'avancement ou de sélectionner une vitesse d'avancement inférieure,
- provoquer automatiquement le relevage d'une hauteur de coupe de la ou des lames de coupe
- provoquer automatiquement une réduction de la vitesse d'avancement, dans le cas d'une tondeuse "autotractée".

D'autres caractéristiques et avantages de l'invention ressortent de la description qui suit, en référence aux figures des dessins annexés. Cette description est donnée à titre purement illustratif et non limitatif.

### Brève description des figures

La figure 1 est une vue sensiblement dans l'axe du capteur optique d'une tondeuse électrique conforme à l'invention.
La figure 2 est une vue de côté de la tondeuse de la figure 1 avec coupe et arrachement partiel à l'avant de la tondeuse,
La figure 3 est un logigramme illustrant un procédé de pilotage d'un moteur électrique d'entraînement de lame d'une tondeuse conforme à l'invention.
La figure 4 est un graphique illustrant un exemple d'évolution d'une vitesse de rotation optimum du moteur électrique d'entraînement de lame en fonction de la végétation à couper, pour une tondeuse conforme à l'invention.

### Description détaillée de modes de mise en oeuvre de l'invention.

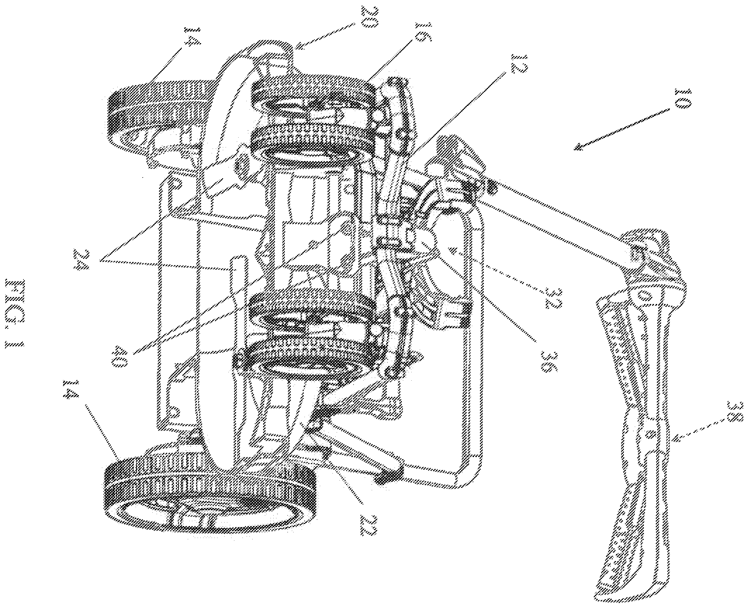

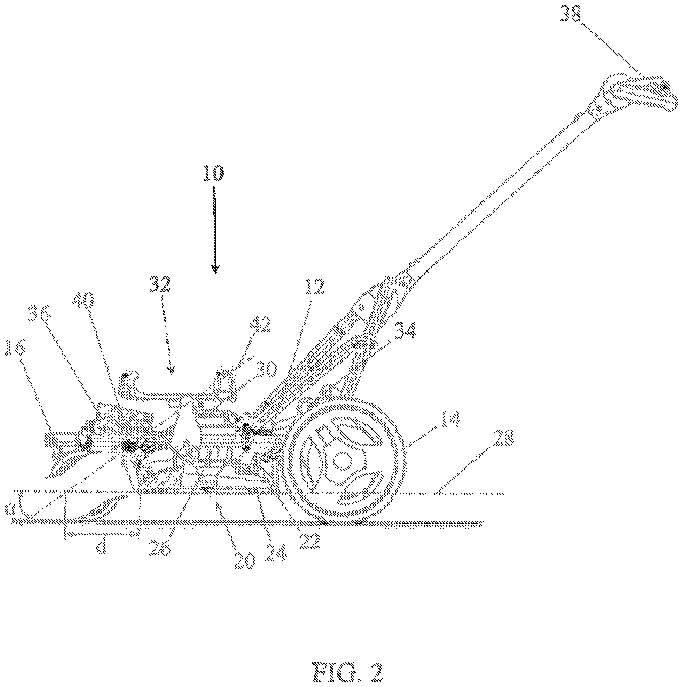

Les figures 1 et 2 montrent une tondeuse à conducteur marchant 10 conforme à l'invention.

La tondeuse comprend un châssis tubulaire 12 sur lequel sont montés un groupe propulseur avec des roues arrière motrices 14, des roues avant pivotantes 16 à rotation libre et une unité de tonte 20. L'unité de tonte 20 comprend un carter de coupe 22 logeant deux lames de coupe 24 et un moteur électrique 26 d'entraînement des lames 24. Le moteur électrique 26 est visible sur la figure 2. Le carter de coupe est monté sur le châssis 12 par un système de fixation à parallélogramme autorisant un réglage en hauteur du carter de coupe 22. Les lames de coupe 24 s'étendent selon un plan de coupe 28.

Le moteur électrique 26 est par exemple un moteur du type sans balai. Une unité de pilotage 30 du moteur électrique comprend une ou plusieurs cartes électroniques logées sous un capot sommital coiffant le moteur électrique 26. L'unité de pilotage comprend notamment des transistors de puissance permettant de délivrer à différents bobinages du moteur des courants d'alimentation. Elle permet également de piloter la vitesse de rotation du moteur par le contrôle des courants d'alimentation.

L'alimentation électrique du moteur électrique 26 est assurée par une batterie électrique rechargeable également fixée sur le châssis tubulaire 12. L'emplacement 32 de la batterie est indiqué sur les figures 1 et 2 mais la batterie n'est pas représentée. La batterie électrique peut aussi fournir un courant électrique nécessaire à l'alimentation de moteurs électrique 34 d'avancement de la tondeuse couplés respectivement aux roues arrière motrices 14.
Enfin, la batterie peut fournir un courant d'alimentation d'un vérin électrique 36, de réglage de la hauteur de coupe. Le vérin électrique 36 permet d'ajuster la position en hauteur du carter de coupe 22, et donc des lames de coupe 24 par rapport au châssis.

L'ajustement de la hauteur du carter de coupe permet aussi de fixer la hauteur du plan de coupe 28 par rapport au sol. L'ajustement de la hauteur de coupe et/ou la vitesse d'avancement de la tondeuse peut être fait par l'intermédiaire d'une interface 38 située au sommet d'un guidon de la tondeuse. Il s'agit d'une interface permettant à l'utilisateur de commander la tondeuse et de prendre connaissance de son état de fonctionnement. L'interface 38 peut en effet comporter des voyants ou d'autres indicateurs sonores ou visuels décrits plus loin. Il convient de préciser que la hauteur de coupe et la vitesse d'avancement peuvent aussi être déterminés automatiquement en tant que fonctions accessoires de l'unité de pilotage 30 mentionnée précédemment.

Une paire de capteurs optiques 40 est fixée en partie haute du carter de coupe 22 c'est-à-dire sur la partie du carter de coupe tournée vers le châssis, de manière que les capteurs soient situés plus haut que les végétaux entrant dans le carter de coupe 22. A titre d'alternative, les capteurs optiques peuvent aussi être fixés sur un tube solidaire du châssis. Chaque capteur optique est pourvu d'un récepteur infrarouge, par exemple une diode ou un transistor, et d'une diode LED infrarouge d'éclairage de la zone de mesure. Comme le montre la figure 1, les capteurs optiques sont orientés vers le sol avec une inclinaison vers une zone de mesure. La zone de mesure se situe sensiblement entre les roues avant 16.

La figure 2 montre un axe de mesure 42 des capteurs optiques. Cet axe forme un angle α avec le plan de coupe 28. Un point d'intersection entre l'axe de mesure 42 des capteurs et le plan de coupe, est situé en amont du carter de coupe d'une distance d. Elle correspond sensiblement à la distance qui sépare la zone de mesure des capteurs optiques de la zone de tonte des lames, considérée parallèlement à l'avancement de la tondeuse. La distance d, de même que l'angle α, sont choisis en fonction de l'anticipation souhaitée pour la fixation de la vitesse de rotation optimum. Ils dépendent également des dimensions de la tondeuse. Dans l'exemple illustré, la distance d est de l'ordre de 15 cm et l'angle α est voisin de 45 degrés d'angle.

La forme et l'étendue de la zone de mesure des capteurs 40 dépendent de la zone de sensibilité des récepteurs IR ainsi que de la zone d'éclairage IR. Il s'agit de préférence d'une zone elliptique. La végétation, et en particulier les brins d'herbe entrant dans cette zone, renvoient une fraction plus ou moins importante de la lumière d'éclairage vers les capteurs, en fonction de leur hauteur et de leur densité. Les capteurs génèrent un signal de mesure proportionnel à l'intensité de la lumière renvoyée depuis la zone de mesure. Ainsi, ce signal est représentatif de la quantité de végétaux qui va atteindre le carter de coupe, et est utilisé pour anticiper la vitesse de rotation optimum du moteur d'entraînement de lame.

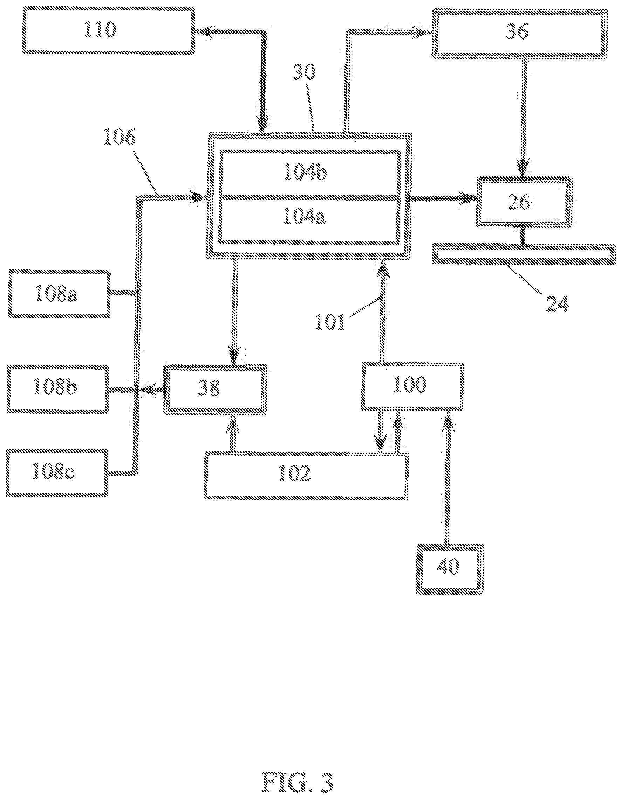

Le logigramme de la figure 3 illustre le procédé de fixation de la vitesse de rotation optimum.

Un signal de mesure en provenance des capteurs 40 est mis en forme par un circuit électronique qui peut être intégré aux capteurs. La mise en forme est indiquée sur la figure 3 avec la référence 100. Elle permet de délivrer un signal 101 prédictif d'une quantité de végétaux qui va atteindre les lames 24 lors de l'avancement de la tondeuse. La mise en forme du signal de mesure peut encore être utilisée pour l'établissement d'un signal 102 d'encrassement des capteurs. Le signal d'encrassement 102 peut être dirigé vers un indicateur de l'interface 38 de la tondeuse. A titre d'exemple, quand l'encrassement excède une consigne préétablie, un avertissement sonore ou visuel peut être émis. Le signal d'encrassement des capteurs peut aussi être utilisé pour corriger le signal des capteurs lors de leur mise en forme 100. Le signal 101 prédictif de la quantité de végétaux qui va atteindre les lames est utilisé comme un paramètre dans une étape 104a, de fixation d'une vitesse de rotation optimum du moteur électrique d'entraînement de lame. Il est aussi utilisé comme paramètre dans une étape conjuguée 104b de fixation d'une accélération, respectivement d'une décélération de la vitesse de rotation. L'accélération et la décélération s'entendent entre une vitesse de rotation optimum précédente et une vitesse de rotation optimum suivante au cours du déplacement de la tondeuse.

Les étapes 104a et 104b correspondent à des opérations de l'unité de pilotage 30 du moteur 26 d'entraînement de lame. Le pilotage prend en compte également un paramètre de vitesse d'avancement de la tondeuse, indiquée par une flèche 106. Il s'agit d'une vitesse de consigne standard 108a, d'une vitesse d'avancement souhaitée 108b sélectionnée par l'utilisateur sur l'interface de commande 38 de la tondeuse, ou d'une vitesse d'avancement effective 108c mesurée par un capteur non représenté du groupe propulseur.
Le pilotage prend encore en compte les données d'une table de correspondance 110 ou d'un programme correspondant, pour la sélection de la vitesse optimum du moteur électrique 26 d'entraînement de lame parmi une pluralité de valeurs prédéterminées. La table de correspondance met en relation les paramètres de quantité de végétaux et de vitesse d'avancement avec une vitesse optimum d'entraînement des lames. Les valeurs d'accélération et de décélération peuvent aussi être lues dans la table de correspondance 110.

En cas de valeurs de vitesse de rotation optimum dépassant les capacités du moteur électrique 26 d'entraînement de lame ou de la batterie d'alimentation, l'unité de pilotage 30, ou une carte électronique dédiée, peut accessoirement commander l'actionnement du vérin 36 pour un relevage temporaire de la hauteur de coupe, ou l'émission d'un avertissement par l'interface 38. L'établissement d'une vitesse optimum qui excéderait les capacités peut aussi être utilisé pour agir sur la commande du groupe propulseur de la tondeuse et provoquer une réduction temporaire de la vitesse d'avancement de la tondeuse. Ces mesures permettent alors de ramener la vitesse de rotation optimum du moteur d'entraînement de lame à des valeurs compatibles avec les capacités de la tondeuse.

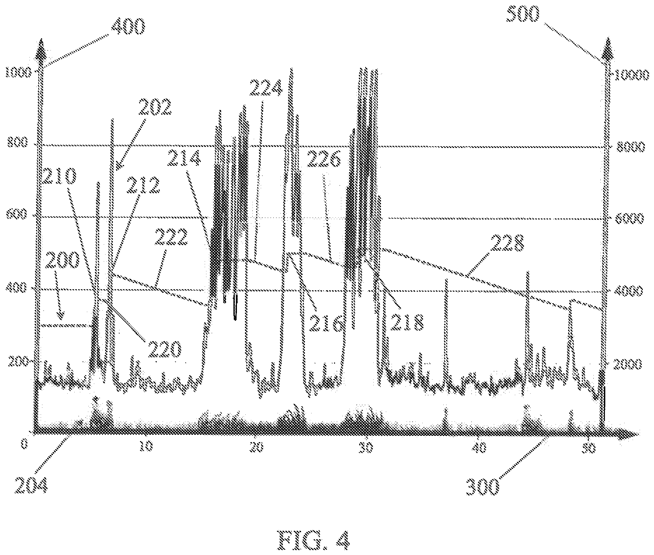

Le graphique de la figure 4 donne une illustration d'un exemple de variations de la vitesse de rotation optimum du moteur d'entraînement de lame en fonction du signal des capteurs optiques sur une période d'une minute.

Le graphique indique en ordonnée l'intensité du signal délivré par les capteurs optiques sur une échelle 400 allant de 0 à 1000, ainsi que la vitesse de rotation optimum des lames, exprimée en tours par minute sur une échelle 500. Le temps, exprimé en secondes, est reporté en abscisse 300. Une courbe 200, en trait discontinu, indique l'évolution de la vitesse de rotation optimum en fonction du temps.
Le graphique montre également l'évolution d'un signal 202 délivré par les capteurs optiques au cours du temps.

Enfin, un liseré 204 en abscisse donne une illustration de la végétation vue par les capteurs optiques au cours du temps.
Il convient de souligner le caractère particulièrement libre de la représentation de la végétation à une dimension, sachant que la zone de mesure du ou des capteurs optiques est une zone tridimensionnelle.
On peut observer que des différentes zones de végétation de hauteur et de densité croissantes vues par les capteurs optiques, notamment dans les 30 premières secondes du graphique, font successivement évoluer la vitesse de rotation optimum à des valeurs 210, 212, 214, 216 et 218. Ces valeurs de vitesse optimum sont atteintes au terme d'accélérations fortes traduites par une pente croissante raide de la courbe 200. Elles correspondent à des amplitudes élevées du signal 202 du capteur optique.
Le pilotage d'une accélération forte répond au besoin d'atteindre la vitesse optimum des lames avant que les lames n'atteignent la zone de végétation plus dense qui a occasionné la sélection d'une vitesse optimum plus forte.
A l'inverse, des zones de plus faible végétation, séparant les zones de plus forte végétation du liseré 204, correspondent à des phases de décélération 222, 224, 226, 228 et à des amplitudes plus faibles du signal des capteurs optiques. On peut observer que la pente de décélération de la vitesse optimum est plus faible que la pente d'accélération. Dans l'exemple illustré, ceci permet d'éviter des variations trop brutales et trop fréquentes de la vitesse de rotation des lames, ainsi qu'un inconfort sonore pour le conducteur et/ou une surconsommation d'énergie électrique de la batterie.

## Revendications

1. Tondeuse électrique du type à batterie comprenant :
- au moins une lame de coupe (24),
- un moteur électrique (26) d'entraînement de la lame de coupe,
- une unité de pilotage électronique (30) du moteur électrique (26),
- au moins un capteur optique (40) disposé en amont de la lame de coupe,
**caractérisé en ce que**
- le capteur optique (40) est orienté vers le sol avec une inclinaison dans une direction d'avancement de la tondeuse, et configuré pour délivrer, au cours de l'avancement de la tondeuse, au moins un signal prédictif (101) utilisable pour déterminer, après traitement, au moins l'un parmi une hauteur de végétaux à couper, une densité de végétaux à couper, et une combinaison d'une hauteur et d'une densité de végétaux à couper,
- l'unité de pilotage électronique (30) est configurée pour établir une vitesse de rotation optimum du moteur d'entraînement de la lame de coupe, la vitesse de rotation optimum étant établie en fonction dudit signal prédictif du capteur optique, et d'une vitesse d'avancement de la tondeuse choisie parmi une vitesse d'avancement standard (108a), une vitesse d'avancement souhaitée (108b), et une vitesse d'avancement effective (108c).

2. Tondeuse selon la revendication 1, dans lequel le capteur optique (40) présente une sensibilité dans une plage de longueurs d'onde lumineuse comprise entre 400 et 1200 nm.

3. Tondeuse selon l'une des revendications 1 ou 2, comprenant une source d'éclairage d'une zone de mesure du capteur optique située à l'avant de la lame de coupe.

4. Tondeuse selon la revendication 3, dans lequel la source d'éclairage est intégrée au capteur optique.

5. Tondeuse selon la revendication 4, dans lequel la source d'éclairage est une source d'éclairage puisée.

6. Tondeuse selon l'une des revendications 1 à 5, comprenant en outre un capteur de vitesse pour établir un signal de vitesse d'avancement effective (108c) de la tondeuse, et dans lequel l'unité de pilotage est reliée au capteur de vitesse pour établir la vitesse de rotation optimum du moteur d'entraînement de la lame en fonction du signal prédictif (101) du capteur optique (40) et en fonction du signal de vitesse d'avancement effective.

7. Tondeuse selon l'une des revendications 1 à 5 comprenant une interface (38) de saisie d'une vitesse d'avancement souhaitée (108b), pour la commande d'au moins un moteur électrique d'avancement de la tondeuse, et dans lequel l'unité de pilotage (30) est reliée à l'interface (38) pour établir la vitesse de rotation optimum du moteur d'entraînement de la lame en fonction du signal prédictif du capteur optique et en fonction de la vitesse d'avancement souhaitée (108b).

8. Tondeuse selon l'une des revendications précédentes dans laquelle l'unité de pilotage est associée à une table de correspondance (110) avec une pluralité de vitesses de rotation de consigne du moteur d'entraînement, l'unité de pilotage étant configurée pour sélectionner la vitesse de rotation optimum du moteur d'entraînement de la lame parmi la pluralité de vitesses de consigne de la table de correspondance.

9. Tondeuse selon la revendication 8, dans laquelle l'unité de pilotage (30) est configurée pour établir une valeur d'accélération, respectivement de décélération, entre une vitesse de rotation optimum courante du moteur d'entraînement de la lame et une nouvelle vitesse de rotation optimum établie lors du déplacement de la tondeuse.

10. Tondeuse selon la revendication 8, dans laquelle l'unité de pilotage (30) est configurée pour établir la valeur d'accélération, respectivement de décélération, en fonction de la vitesse d'avancement de la tondeuse.

11. Tondeuse selon l'une quelconque des revendications précédentes, comprenant une carte de traitement de signal associée au capteur optique, la carte de traitement de traitement de signal étant configurée pour établir un signal (102) d'encrassement du capteur.

12. Tondeuse selon la revendication 11, comprenant une pluralité de capteurs optiques (40), la carte de traitement de signal étant configurée pour établir le signal prédictif en fonction d'un signal de mesure de chaque capteur optique.

13. Tondeuse selon l'une quelconque des revendications précédentes, dans lequel la lame de coupe est agencée selon un plan de coupe (28), et dans lequel le capteur optique présente un axe de mesure (42) Incliné dans une direction d'avancement de la tondeuse, avec un angle d'inclinaison par rapport au plan de coupe compris entre 15 et 75 degrés d'angle.

14. Tondeuse selon l'une quelconque des revendications précédentes, comprenant un carter de coupe (22) logeant la lame de coupe (24), et dans laquelle le capteur optique (40) présente une zone de mesure située à une distance du carter de coupe comprise entre 10 et 30 cm, et mesurée parallèlement à l'avancement de la tondeuse.

15. Tondeuse selon l'une quelconque des revendications précédentes **caractérisée en ce qu'**il s'agit d'une une tondeuse à conducteur marchant.

16. Procédé de pilotage d'un moteur d'entraînement (26) d'au moins une lame de coupe (24) d'une tondeuse électrique (10) du type à batterie selon l'une quelconque des revendications 1-15, comprenant:
- une mesure prédictive (101) en amont de la lame de coupe, et au cours d'un avancement de la tondeuse, d'au moins l'un parmi une hauteur de végétaux, une densité de végétaux et une combinaison d'une hauteur et d'une densité de végétaux susceptibles d'atteindre la lame de coupe,
- l'établissement d'une vitesse d'avancement de la tondeuse (108a, 108b, 108c),
- la fixation (104a), au fur et à mesure de l'avancement de la tondeuse, d'une vitesse de rotation optimum (210, 212, 214, 216, 218) du moteur d'entraînement de la lame de coupe, la vitesse de rotation optimum étant établie en fonction de ladite mesure prédictive, et en fonction de la vitesse d'avancement de la tondeuse,
- l'alimentation électrique du moteur d'entraînement (26) avec une énergie suffisante pour provoquer une rotation du moteur d'entraînement de la lame de coupe à la vitesse de rotation optimum.

17. Procédé selon la revendication 16, dans lequel la fixation de la vitesse de rotation optimum du moteur d'entraînement de lame est périodique.

18. Procédé selon la revendication 16 ou 17, comprenant un relevage transitoire et automatique de la lame de coupe, en cas de fixation d'une vitesse de rotation optimum excédant une capacité de l'un du moteur électrique et d'une batterie d'alimentation électrique du moteur électrique.

19. Procédé selon l'une des revendications 16 à 18, comprenant l'émission d'un signal d'avertissement en cas de fixation d'une vitesse de rotation optimum excédant une capacité de l'un du moteur électrique et d'une batterie d'alimentation électrique du moteur électrique.

## Patentansprüche

1. Batteriebetriebener Elektromäher vom Batterietyp, umfassend:
- mindestens ein Schneidmesser (24),
- einen Elektromotor (26) zum Antreiben des Schneidmessers,
- eine elektronische Steuereinheit (30) des Elektromotors (26),
- mindestens einen optischen Sensor (40), der dem Schneidmesser vorgelagert angeordnet ist,
**dadurch gekennzeichnet ist, dass**
- der optische Sensor (40) mit einem Winkel in eine Fahrtrichtung des Mähers auf den Boden gerichtet und dazu konfiguriert ist, beim Fahren des Mähers mindestens ein Vorhersagesignal (101) bereitzustellen, das verwendet werden kann, um nach der Bearbeitung mindestens eines von einer Höhe von zu schneidenden Pflanzen, einer Dichte von zu schneidenden Pflanzen und einer Kombination aus einer Höhe und einer Dichte von zu schneidenden Pflanzen zu bestimmen,
- die elektronische Steuereinheit (30) dazu konfiguriert ist, eine optimale Drehzahl des Antriebsmotors des Schneidmessers, wobei die optimale Drehzahl auf Grundlage des Vorhersagesignals des optischen Sensors bestimmt wird, und eine Fahrgeschwindigkeit des Mähers, ausgewählt aus einer standardmäßigen Fahrgeschwindigkeit (108a), einer gewünschten Fahrgeschwindigkeit (108b) und einer tatsächlichen Fahrgeschwindigkeit (108c), zu bestimmen.

2. Mäher nach Anspruch 1, wobei der optische Sensor (40) eine Empfindlichkeit in einem Lichtwellenlängenbereich zwischen 400 und 1200 nm umfasst.

3. Mäher nach Anspruch 1 oder 2, umfassend eine Lichtquelle eines Messbereichs des optischen Sensors vor dem Schneidmesser.

4. Mäher nach Anspruch 3, wobei die Lichtquelle in den optischen Sensor integriert ist.

5. Mäher nach Anspruch 4, wobei die Lichtquelle eine gepulste Lichtquelle ist.

6. Mäher nach einem der Ansprüche 1 bis 5, ferner umfassend einen Geschwindigkeitssensor zum Bestimmen eines Signals einer tatsächlichen Fahrgeschwindigkeit (108c) des Mähers, und wobei die Steuereinheit mit dem Geschwindigkeitssensor verbunden ist, um die optimale Drehzahl des Antriebsmotors des Messers in Abhängigkeit von dem Vorhersagesignal (101) des optischen Sensors (40) und in Abhängigkeit von dem Signal der tatsächlichen Fahrgeschwindigkeit zu bestimmen.

7. Mäher nach einem der Ansprüche 1 bis 5, umfassend eine Schnittstelle (38) der Eingabe einer gewünschten Fahrgeschwindigkeit (108b) zum Steuern von mindestens einem Elektromotor zum Fahren des Mähers, und wobei die Steuereinheit (30) mit der Schnittstelle (38) verbunden ist, um die optimale Drehzahl des Antriebsmotors des Messers in Abhängigkeit von dem Vorhersagesignal des optischen Sensors und in Abhängigkeit von der gewünschten Fahrgeschwindigkeit (108b) zu bestimmen.

8. Mäher nach einem der vorhergehenden Ansprüche, wobei die Steuereinheit mit einer Entsprechungstabelle (110) mit einer Vielzahl von angezielten Drehzahlen des Antriebsmotors assoziiert ist, wobei die Steuereinheit dazu konfiguriert ist, die optimale Drehzahl des Antriebsmotors des Messers unter der Vielzahl von angezielten Drehzahlen der Entsprechungstabelle auszuwählen.

9. Mäher nach Anspruch 8, wobei die Steuereinheit (30) dazu konfiguriert ist, einen Wert der Beschleunigung bzw. Verlangsamung zwischen einer aktuellen optimalen Drehzahl des Antriebsmotors des Messers und einer neuen optimalen Drehzahl, die während des Fahrens des Mähers bestimmt wird, zu bestimmen.

10. Mäher nach Anspruch 8, wobei die Steuereinheit (30) dazu konfiguriert ist, den Wert der Beschleunigung bzw. Verlangsamung in Abhängigkeit von der Fahrgeschwindigkeit des Mähers zu bestimmen.

11. Mäher nach einem der vorhergehenden Ansprüche, umfassend eine Signalverarbeitungsplatine, die mit dem optischen Sensor assoziiert ist, wobei die Signalverarbeitungsplatine dazu konfiguriert ist, ein Signal (102) für die Sensorverschmutzung zu bestimmen.

12. Mäher nach Anspruch 11, umfassend eine Vielzahl von optischen Sensoren (40), wobei die Signalverarbeitungsplatine dazu konfiguriert ist, das Vorhersagesignal in Abhängigkeit von einem Messsignal von jedem optischen Sensor zu bestimmen.

13. Mäher nach einem der vorhergehenden Ansprüche, wobei das Schneidmesser in einer Schneidebene (28) angeordnet ist und wobei der optische Sensor eine Messachse (42) aufweist, die in Fahrtrichtung des Mähers geneigt ist, wobei ein Neigungswinkel relativ zur Schneidebene zwischen 15 und 75 Winkelgrad umfasst.

14. Mäher nach einem der vorhergehenden Ansprüche, umfassend ein Mähgehäuse (22), weches das Schneidmesser (24) aufnimmt, und wobei der optische Sensor (40) einen Messbereich aufweist, der sich in einem Abstand von dem Mähgehäuse zwischen 10 und 30 cm befindet und parallel zur Fahrt des Mähers misst.

15. Mäher nach einem der vorhergehenden Ansprüche, **dadurch gekennzeichnet, dass** es sich dabei um einen handgeführten Mäher handelt.

16. Verfahren zum Antreiben eines Antriebsmotors (26) von mindestens einem Schneidmesser (24) eines batteriebetriebenen Elektromähers (10) nach einem der Ansprüche 1-15, umfassend:
- ein Vorhersagemaß (101) vor dem Schneidmesser, und während des Fahrens des Mähers, mindestens eines von einer Höhe von Pflanzen, einer Dichte von Pflanzen und einer Kombination aus einer Höhe und einer Dichte von Pflanzen, die das Schneidmesser berühren können,
- Bestimmen einer Fahrgeschwindigkeit des Mähers (108a, 108b, 108c),
- die Festlegung (104a), entsprechend dem Fahren des Mähers, einer optimalen Drehzahl (210, 212, 214, 216, 218) des Antriebsmotors des Schneidmessers, wobei die optimale Drehzahl in Abhängigkeit von dem Vorhersagemaß und in Abhängigkeit von der Fahrgeschwindigkeit des Mähers bestimmt wird,
- die Stromversorgung des Antriebsmotors (26) mit ausreichend Energie, um eine Rotation des Antriebsmotors des Schneidmessers bei der optimalen Drehzahl zu veranlassen.

17. Verfahren nach Anspruch 16, wobei das Festlegen der optimalen Drehzahl des Antriebsmotors des Messers regelmäßig erfolgt.

18. Verfahren nach Anspruch 16 oder 17, umfassend ein transientes und automatisches Anheben des Schneidmessers, wenn eine optimale Drehzahl festgelegt wird, die eine Kapazität von einem des Elektromotors und einer Batterieleistung des Elektromotors überschritten wird.

19. Verfahren nach einem der Ansprüche 16 bis 18, umfassend das Ausgeben eines Warnsignals, wenn eine festgelegte optimale Drehzahl eine Kapazität von einem des Elektromotors und einer Batterieleistung des Elektromotors überschritten wird.

## Claims

1. An electric mower of the battery-powered type comprising:
- at least one cutting blade (24),
- an electric motor (26) for driving the cutting blade,
- an electronic control unit (30) for the electric motor (26), and
- at least one optical sensor (40) disposed upstream of the cutting blade,
**characterised in that**
- the optical sensor (40) is oriented towards the ground with an inclination in a direction of forward movement of the mower and configured to deliver in the course of the forward movement of the mower at least one predictive signal (101) which can be used to determine after processing at least one of the height of plants to be cut, a density of plants to be cut, and a combination of a height and a density of plants to be cut,
- the electronic control unit (20) is configured to establish an optimum speed of rotation for the cutting blade drive motor, the optimum speed of rotation being established in dependence on said predictive signal of the optical sensor, and a speed of forward movement of the mower selected from a standard speed of forward movement (108a), a desired speed of forward movement (108b) and an effective speed of forward movement (108c).

2. A mower according to claim 1 wherein the optical sensor (40) has a sensitivity in a range of light wavelengths of between 400 and 1200 nm.

3. A mower according to one of claims 1 and 2 comprising a lighting source for a measurement zone of the optical sensor, that Is disposed in front of the cutting blade.

4. A mower according to claim 3 wherein the lighting source is integrated with the optical sensor.

5. A mower according to claim 4 wherein the lighting source is a pulsed lighting source.

6. A mower according to one of claims 1 to 5 further comprising a speed sensor for establishing an effective forward movement speed signal (108c) of the mower and wherein the control unit is connected to the speed sensor for establishing the optimum speed of rotation of the blade drive motor in dependence on the predictive signal (101) of the optical sensor (40) and in dependence on the effective forward movement speed signal.

7. A mower according to one of claims 1 to 6 comprising an interface (38) for receiving a desired forward movement speed (108b), for controlling at least one electric motor for forward movement of the mower, and wherein the control unit (30) is connected to the interface (38) to establish the optimum speed of rotation of the blade drive motor in dependence on the predictive signal of the optical sensor and in dependence on the desired forward movement speed (108b).

8. A mower according to one of the preceding claims wherein the control unit is associated with a correspondence table (110) with a plurality of reference speeds of rotation of the drive motor, the control unit being configured to select the optimum speed of rotation of the blade drive motor from the plurality of reference speeds of the correspondence table.

9. A mower according to claim 8 wherein the control unit (30) is configured to establish an acceleration value and a deceleration value respectively between a current optimum speed of rotation of the blade drive motor and a new optimum speed of rotation established upon displacement of the mower,

10. A mower according to claim 8 wherein the control unit (30) is configured to establish the acceleration and deceleration values respectively as a function of the speed of forward movement of the mower.

11. A mower according to any one of the preceding claims comprising a signal processing card associated with the optical sensor, the signal processing card being configured to establish a sensor fouling signal (102).

12. A mower according to claim 11 comprising a plurality of optical sensors (40), the signal processing card being configured to establish the predictive signal in dependence on a measurement signal of each optical sensor.

13. A mower according to any one of the preceding claims wherein the cutting blade is arranged in a cutting plane (28) and wherein the optical sensor has a measurement axis (42) which is inclined in a direction of forward movement of the mower with an angle of inclination with respect to the cutting plane of between 15 and 75 degrees of angle.

14. A mower according to any one of the preceding claims comprising a cutting casing (22) accommodating the cutting blade (24) and wherein the optical sensor (40) has a measurement zone disposed at a distance from the cutting casing of between 10 and 30 cm and measured parallel to the forward movement of the mower.

15. A mower according to any one of the preceding claims **characterised in that** it is a walk-behind mower.

16. A method of controlling a drive motor (26) of at least one cutting blade (24) of an electric mower (10) of battery-powered type according to any one of claims 1 to 15, comprising:
- a predictive measurement (101) upstream of the cutting blade and in the course of a forward movement of the mower of at least one of a height of plants, a density of plants and a combination of a height and a density of plants capable of reaching the cutting blade,
- establishing a speed of forward movement of the mower (108a, 108b, 108c),
- fixing (104) as the mower moves forward of an optimum speed of rotation (210, 212, 214, 216, 218) of the cutting blade drive motor, the optimum speed of rotation being established in dependence on said predictive measurement and in dependence on the speed of forward movement of the mower, and
- electric power supply to the drive motor (26) with sufficient power to cause rotation of the cutting blade drive motor at the optimum speed of rotation.

17. A method according to claim 16 wherein fixing of the optimum speed of rotation of the blade drive motor is periodic.

18. A method according to claim 16 or claim 17 comprising a temporary and automatic raising of the cutting blade in the case of fixing an optimum speed of rotation exceeding a capacity of one of the electric motor and an electric power supply battery of the electric motor.

19. A method according to one of claims 16 to 18 comprising the emission of a warning signal in the case of fixing an optimum speed of rotation exceeding a capacity of one of the electric motor and an electric power supply battery of the electric motor.
